(19) **Europäisches Patentamt**
**European Patent Office**
**Office européen des brevets**

(11) Publication number: **0 295 301 B1**

# EUROPEAN PATENT SPECIFICATION

(12)

(45) Date of publication of patent specification:
**10.07.91 Bulletin 91/28**

(51) Int. Cl.⁵: **B29C 73/08**

(21) Application number: **87900296.2**

(22) Date of filing: **27.12.86**

(86) International application number:
**PCT/JP86/00669**

(87) International publication number:
**WO 88/04997 14.07.88 Gazette 88/15**

(54) **REPAIR TOOLS FOR PUNCTURED TIRES.**

(43) Date of publication of application:
**21.12.88 Bulletin 88/51**

(45) Publication of the grant of the patent:
**10.07.91 Bulletin 91/28**

(84) Designated Contracting States:
**DE FR GB IT**

(56) References cited:
**CH-A- 338 364**
**DE-A- 2 204 089**
**JP-B- 593 282**
**US-A- 1 596 822**
**US-A- 2 990 736**
**US-A- 3 175 432**
**US-A- 3 310 095**

(73) Proprietor: **NISHINO, Tatsuji**
**2-52, Sarayama 3-chome Minami-ku**
**Fukuoka-shi**
**Fukuoka 815 (JP)**

(72) Inventor: **NISHINO, Tatsuji**
**2-52, Sarayama 3-chome Minami-ku**
**Fukuoka-shi**
**Fukuoka 815 (JP)**

(74) Representative: **Patentanwälte Deufel, Hertel, Lewald**
**Postfach 26 02 47 Isartorplatz 6**
**W-8000 München 26 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

[FIELD OF ART]

The invention relates to a repair tool for punctured tires according to the precharacterizing part of claim 1.

[BACKGROUND OF THE INVENTION]

A filling plug for and means of externally mending punctures of tubeless tires have been disclosed by the present applicator in Publication JP-A 54-175 704.

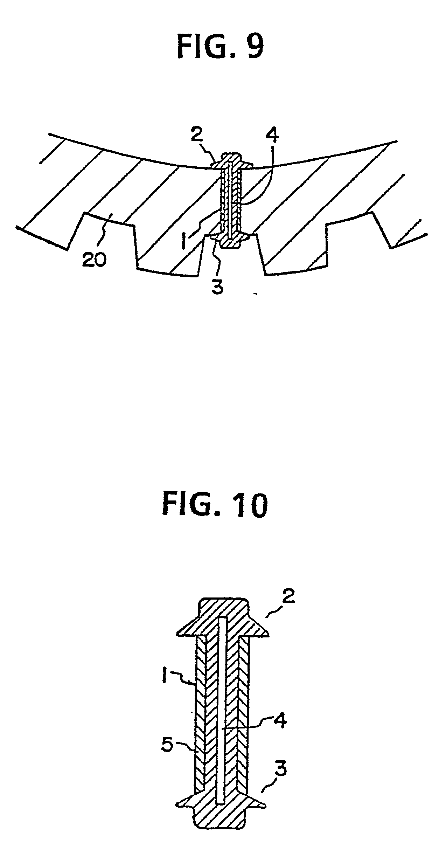

The filling plug, as shown in Fig. 10, has the upper and lower ends 2 and 3 formed with a larger flange than the outside diameter of a cylindrical main body 1 respectively, and an aggregate 4 embedded in the center of said main body 1 so as to connect the flanged ends 2 and 3, the outer layer 5 of said main body 1 being of unvulcanized rubber and the rest thereof being of vulcanized rubber except said aggregate 4. The aggregate 4 prevents the plug from getting cut and separated by tire steel cords due to the standing wave phenomenon of the tire while running. In addition, the flanged parts 2 and 3 act to prevent the plug inserted from falling from the top and protect the periphery thereof.

A process and tools for mending punctured tires by the use of said filling plug have been disclosed in the specification of DE-A-2 204 089 (corresponding to the preamble of claim 1) wherein a puncture is mended by means of a first tool having a drill to be inserted into the puncture and a second tool having a push rod with which said filling plug is pushed into a sheath guide forced in screwed engagement with the first tool into the puncture and left therein. In this case it is necessary to look for the second tool if left on the floor or somewhere else after inserting the first tool to replace them, and take much care to their custody.

This document also discloses a repair tool wherein the pointed tool rod is attached to one end of the holder and the shaft (i.e. the push rod) is attachable to the her end of the holder.

US-A-1 596 822 discloses a repair tool utilizing a handle member provided with a shank and a needle to be introduced into the puncture. After insertion, the needle is detached and the shank of a rubber plug is attached from inside the tire to the shank.

The objet of the present invention is to eliminate the need for insert-moulding resin and metal as with conventional tools and make for light weight along with a simplified manufacturing process and cost reduction. This object is attained by a repair tool as defined in claim 1.

[DISCLOSURE OF THE INVENTION]

The present invention is a repair tool for punctured tires such as defined in claim 1.

[BRIEF DESCRIPTION OF DRAWING]

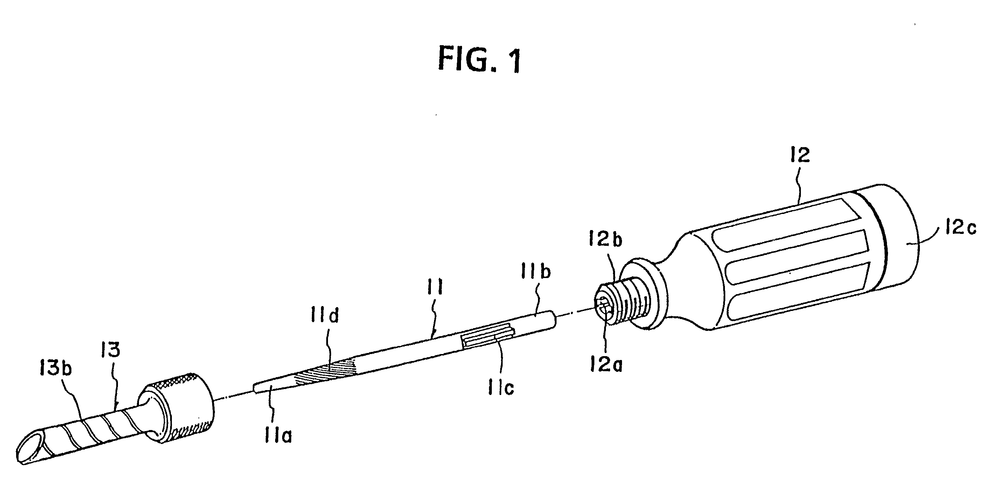

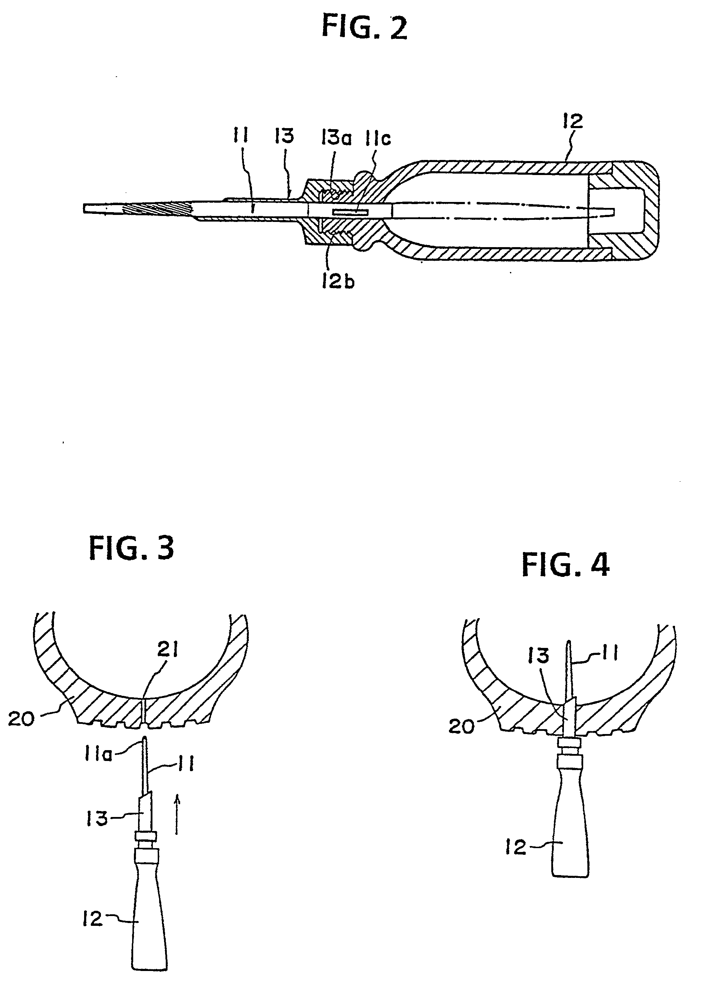

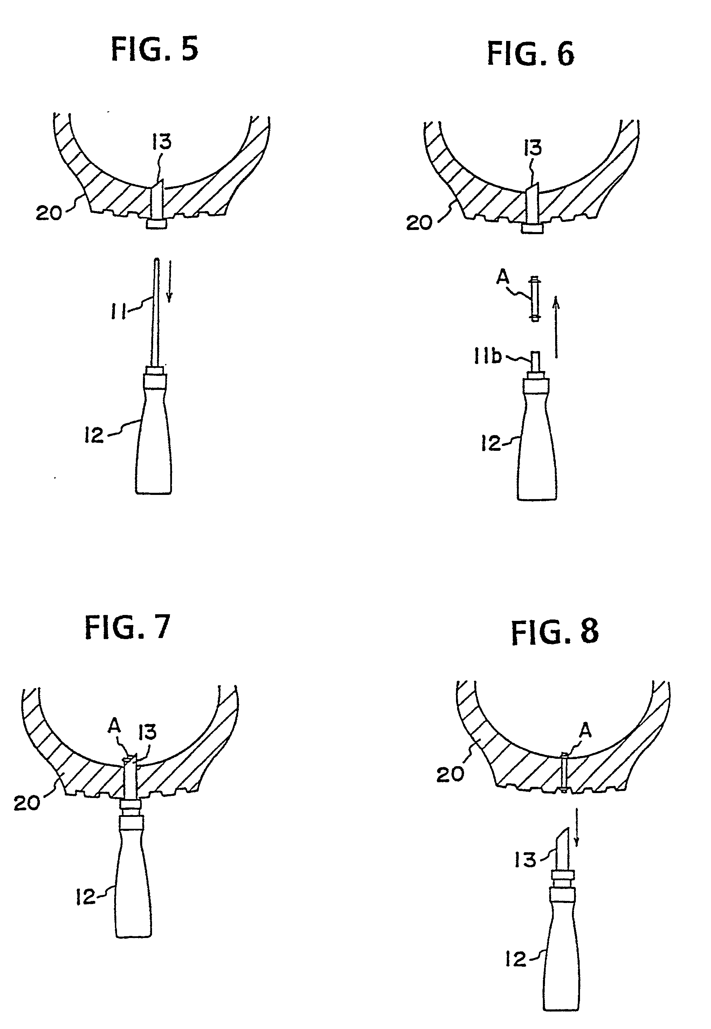

Fig. 1 is an exploded perspective view showing an embodiment of the invention ; Fig. 2 is a cross-sectional view of the assembly ; Figs.3 to 8 are schedule drawings illustrating a process for mending a punctured tire by the use of the tool of the invention ; Fig. 9 is an enlarged view of the main part of Fig. 8 ; and Fig. 10 is an enlarged section of the filling plug.

[PREFERRED EMBODIMENT OF THE INVENTION]

Hereinafter, the invention is described referring to the drawings showing embodiments thereof.

Fig. 1 is an exploded perspective view of a mending tool of the invention, where 11 indicates a tool rod having the point formed in a drill 11a, the base end formed in a push rod 11b, and a portion (key) 11c near said base end acting as a turn preventive and stopper to prevent the turn and any further insertion of the tool rod in a holder 12, the peripheral surface of said pointed end being provided with spiral stripes which facilitate the screw-in of the rod into a puncture. The top end of the holder 12 is internally provided with the mating portion (keyways) 12a to fit said portion 11c and peripherally formed with male screw 12b. The holder 12 which is hollow can accommodate articles necessary for mending punctures such as filling plugs and tubes of vulcanization accelerant, 12c indicating the cap thereof. 13 indicates a sheath guide internally provided with a female screw 13a to be engaged with said male screw 12b of the holder 12 as shown in Fig. 2 and peripherally with spiral stripes, said sheath being beveled at the pointed end.

Fig. 2 is a cross-sectional view showing said components assembled into a tool.

Hereinafter, description is given about a process for mending a punctured tire by means of the embodiment of the invention.

First, insert the pointed end of the tool assembled as in Fig. 2 in a puncture 21 of a tire 20 shown in Fig. 3. (Fig. 4) The tool may be required to pass through layers of tire steel cords and others. If the cut of said sheath guide 13 is at a right angle to the axis thereof, the tool cannot turn through because it gets caught at the sheath cut by steel cords. However, if the sheath 13 is given a taper cut, the tool can relatively easily get through the steel cord layer by turning the tool into the puncture.

After the complete insertion of the tool point into the puncture 21 disengage the holder 12 from the sheath guide 13 as shown in Fig. 5 to remove the holder 12 and the rod 11 leaving only the sheath guide 13 therein.

Then, reinstall the tool rod 11 to the holder 12 in such a way that the push rod side 11b is the top thereof, and push a filling plug A coated with vulcanization accelerant into the sheath guide 13 left in the puncture by means of the push rod 11b. Hence, the filling plug A is guided inside the sheath 13, thereby protecting the vulcanization accelerant from getting wiped away.

The projecting length of the push rod 11b from the holder 12 is so determined that the flanged point 2 of the plug A filled in the sheath guide protudes slightly out of the beveled end of the sheath guide 13 when the push rod 11b is pushed into the sheath guide 13 to the end.

Next, turn the holder 12 to engage with the sheath guide 13 (Fig. 7) and pull out the sheath 13 and the holder 12 together, which leaves only the plug A in the puncture 21 of the tire 20. (Figs. 8 and 9)

Although the drawings show the flanged end 2 of the plug A is slightly projected into the inside of the tire, the flanged part 2 remains an appropriate length in the puncture 21 depending on the thickness of the tire. The flanged part 2 acts as a stopper against the separation of the plug A due to a centrifugal force while running in cooperation with the deformation of unvulcanized rubber subjected to the vulcanization process during running, thus resulting in the secure filling of the plug in the puncture.

In this way, the unvulcanized part of the plug A gets subjected to accelerated vulcanization due to the frictional heat generated in the tire while running, causing the plug to integrate with the tire rubber in the process from the viscous to the curing state of the unvulcanized part.

As described above, the invention can provide effects listed below :

① The entire puncture mending process can be completed simply by re-attaching three types of tool members in sequence to the holder. All the members are used until the completion of the process, which can eliminate the carelessness with which any is left on the floor and provide for a highly efficienct operation.

② The sheath guide beveled at the point permits the tool rod to pass through the steel cord layer of a tire with relative ease.

③ The hollow holder can accommodate all the components and fittings such as Filling plugs. This design makes it possible to put all the members together into one tool after the operation and reduce the volume of molding material used. Additionally, the tool is small and light and convenient for travelling on a vehicle such as a motorcycle without any spare tire on.

④ The design of the holder and the tool separately constructed has eliminated the need of insert-molding resin and metal as with conventional tools and can make for light weight and mass production along with a simplified manufacturing process and cost reduction.

[INDUSTRIAL FEASIBILITY OF THE INVENTION]

The invention can be utilized as a puncture mending tool of tubeless tires in the automobile industry. Since the holder is of plastic and the tool rod is of metal such as iron, the tools can be manufactured in the plastic and metallic industries.

## Claims

1. A repair tool for punctured tires comprising a tool rod (11) having a pointed end (11a) ; a holder (12) ; and a sheath guide (13) releasably connected to the holder (12) to loosely fit around the tool rod (11) attached to the holder (12), the inside diameter of said sheath guide (13) being nearly equal to the diameter of a filling plug (A) to be loaded therein, the length of said sheath guide (13) being such that the pointed and (11a) of said tool rod (11) is not surrouned by the sheath guide (13) ; **characterized in that** said tool rod (11) has a push rod end (11b) at the opposite end of the tool rod to said pointed end (11a) ; said pointed end (11a) being formed into a drill and a portion near the push rod side (11b) being formed with a turn preventing key (11c) ; said holder (12) allowing the foreward and reverse installation and removal of said rod (11) and having mating keyways (12a) with which said key (11c) gets into engagement to stop the rotation of the tool rod (11) and any further insertion beyond a given length thereof.

2. The repair tool as defined in claim 1, characterized in that said sheath guide (13) is bevelled at the point.

3. The repair tool as defined in claim 1 or 2, characterized in that the holder (12) is hollow.

## Patentansprüche

1. Reparaturwerkzeug für Reifenpannen bzw. für undichte Reifen, mit einem Werkzeugstab (11), der ein zugespitztes Ende (11a) aufweist, einem Halter (12) ; und einer Hülsenführung (13), die trennbar mit dem Halter (12) verbunden ist, um um den Werkzeugstab (11), der an dem Halter (12) befestigt ist lose zu passen, wobei der Innendurchmesser der Hülsenführung (13) dem Durchmesser eines Füllstutzens (A), der darin eingesetzt wird, etwa gleich ist und die Lange der Hülsenführung (13) derart ist, daß das zugespitzte Ende (11a) des Werkzeugstabs (11) nicht von der Hülsenführung (13) umgeben ist, dadurch **gekennzeichnet**, daß der Werkzeugstab (11) ein Stösselende bzw. Druckstabende (11b) an dem zu dem zugespitzten Ende (11a) des Werkzeugstabs entgegengesetzten Ende aufweist, das zugespitzte Ende (11a) zu einem Bohrer geformt ist und einen Abschnitt nahe dem Druckstabende (11b) mit einem Drehunterbindungskeil (11c) gebildet ist, der Halter (12) den Ein- und Ausbau des Stabs (11) von vorne und von hinten zuläßt und passende Keilnuten (12a) aufweist, die mit dem Keil (11c) in Eingriff kommen, um die Rotation des Werkzeugstabs (11) und dessen jegliches weitere Einsetzen über eine gegebene Länge hinaus zu unterbinden.

2. Reparaturwerkzeug für Reifenpannen nach Anspruch 1, dadurch **gekennzeichnet**, daß das Hüllrohr (13) an der Spitze abgeschrägt ist.

3. Reparaturwerkzeug für Reifenpannen nach Anspruch 1 oder 2, dadurch **gekennzeichnet**, daß der Halter (12) hohl ist.

## Revendications

1. Outil de réparation de pneus crevés, comprenant

   – une tige d'outil (11) présentant une extrémité pointue (11a) ;

   – une poignée (12) ; et

   – une gaine-guide (13) reliée de façon amovible à la poignée (12), disposée de manière lâche autour de la tige d'outil (11) fixée à la poignée (12), le diamètre intérieur de ladite gaine-guide (13) étant presque égal au diamètre d'un bouchon de remplissage (A) à introduire dans la gaine-guide, la longueur de ladite gaine-guide (13) étant telle que l'extrémité pointue (11a) de ladite tige d'outil (11) n'est pas entourée par la gaine-guide (13), caractérisé en ce que ladite tige d'outil (11) comprend une extrémité de tige-poussoir (11b) à l'extrémité opposée de la tige d'outil, par rapport à ladite extrémité pointue (11a) ; ladite extrémité pointue (11a) étant réalisée en forme de foret et la partie située à proximité du côté tige-poussoir (11b) étant réalisée avec une clavette (11c) empêchant la rotation ; ladite poignée (12) permettant la mise en place et le démontage avec orientation soit vers l'avant soit vers l'arrière de ladite tige (11) et présentant des rainures de clavette (12a) adaptées à coopérer avec la clavette (11c) pour bloquer et la rotation de la tige d'outil (11) et toute pénétration supplémentaire de ladite tige d'outil au-delà d'une longueur donnée.

2. Outil de réparation selon la revendication 1, caractérisé en ce que la pointe de ladite gaine-guide (13) est biseautée.

3. Outil de réparation selon la revendication 1 ou 2, caractérisé en ce que la poignée (12) est creuse.

# FIG. 1

EP 0 295 301 B1

# FIG. 2

# FIG. 3

# FIG. 4

# FIG. 5

# FIG. 6

# FIG. 7

# FIG. 8

## FIG. 9

## FIG. 10